# EUROPEAN PATENT APPLICATION

(11) **EP 4 837 756 A1**
(43) Date of publication of application: **11.11.2026**
(21) Application number: 24915167.1
(22) Date of filing: 26.12.2024
(51) Int. Cl.: B60G 17/0165, B60G 17/0195, B60L 15/20, B60L 15/32, B60W 10/08

(54) **VEHICLE ESCAPE CONTROL METHOD AND APPARATUS, AND DEVICE AND STORAGE MEDIUM**

(30) Priority: 03.01.2024 CN 202410009169
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WANG, Yizhe, Ningbo, Zhejiang 315899 (CN)
(74) Representative: Boult Wade Tennant LLP
(86) International application number: PCT/CN2024/142639
(87) International publication number: WO 2025/145952

(57) **Abstract**

Provided are a method, an apparatus and a device for controlling vehicle extrication, and a storage medium. The method includes: S201, controlling a suspension (102) to extend to a maximum stretch state, in response to a user's activation operation of an extrication mode; S202, controlling a front-axle motor (103) to rotate in a forward direction to drive wheels in forward rotation, and controlling a rear-axle motor (104) to rotate in the reverse direction to drive wheels in reverse rotation; S203, acquiring a tire pressure of each wheel in real time, and controlling the front axle motor and the rear axle motor to stop when all tire pressures meet a motor stop condition; S204, controlling the suspension to retract, and controlling the front axle motor and the rear axle motor first to rotate in the reverse direction at low speed and then to rotate in the forward direction at low speed according to a reciprocating-motion mode until the suspension is retracted to a maximum retraction state; S205, controlling the front axle motor and the rear axle motor to stop, and controlling the suspension to extend to the maximum stretch state; S206, controlling the front axle motor and the rear axle motor to rotate when a sum of all the tire pressures is equal to weight data of the vehicle, to drive the wheels to rotate to complete extrication. This method enables a driver to independently operate the vehicle to complete extrication and self-rescue when the vehicle is stuck in sand.

## Description

The present application claims priority to Chinese patent application No. 202410009169.7, filed to China National Intellectual Property Administration on January 3, 2024 and entitled "METHOD, APPARATUS AND DEVICE FOR CONTROLLING VEHICLE EXTRICATION, AND STORAGE MEDIUM", which is hereby incorporated by reference in its entirety.

### TECHNICAL FIELD

The present application relates to, but is not limited to, the field of vehicle technologies, and in particular, to a method, an apparatus, and a device for controlling vehicle extrication, and a storage medium.

### BACKGROUND

During a vehicle travels on a road with complex road conditions, such as sand ground, soft, loose sand may cause the vehicle to become stuck in sand and unable to drive out. At this time, one can only wait for external rescue or rely on manual self-rescue by the occupants, both of which consume significant manpower, material resources, or time. Therefore, there is an urgent need for a control method that enables automatic vehicle extrication, which allows a driver to independently operate the vehicle to accomplish extrication and self-rescue when the vehicle is stuck in sand.

### SUMMARY

The following is a summary of the subject matters described in detail herein. This summary is not intended to limit the scope of the claims.

The present application provides a method, an apparatus, and a device for controlling vehicle extrication, and a storage medium, which enables a driver to independently operate the vehicle to complete extrication and self-rescue when the vehicle is stuck in sand.

The objectives of the present invention are achieved by the following technical solutions.

In a first aspect, the present invention provides a method for controlling vehicle extrication, where the vehicle includes a vehicle body, a suspension installed at a bottom of the vehicle body, a plurality of wheels connected to the suspension, a front-axle motor installed at the bottom of the vehicle body for driving the wheels, and a rear-axle motor installed at the bottom of the vehicle body for driving the wheels, where the method includes:
controlling the suspension to extend to a maximum stretch state, in response to a user's activation operation of an extrication mode;
controlling the front-axle motor to rotate in a forward direction to drive the wheels in forward rotation, and controlling the rear-axle motor to rotate in a reverse direction to drive the wheels in reverse rotation;
acquiring a tire pressure of each wheel in real time, and controlling the front-axle motor and the rear-axle motor to stop when all tire pressures meet a motor stop condition;
controlling the suspension to retract, and controlling the front-axle motor and the rear-axle motor first to rotate in the reverse direction at low speed and then to rotate in the forward direction at low speed according to a reciprocating-motion mode until the suspension is retracted to a maximum retraction state;
controlling the front-axle motor and the rear-axle motor to stop, and controlling the suspension to extend to the maximum stretch state;
controlling the front-axle motor and the rear-axle motor to rotate when a sum of all the tire pressures is equal to weight data of the vehicle, to drive the wheels to rotate to complete extrication.

In a possible implementation, the motor stop condition is that all the tire pressures are equal to zero and/or less than a preset calibration threshold. Correspondingly, the front-axle motor and the rear-axle motor are controlled to stop when all the tire pressures meet the motor stop condition, and the front-axle motor and the rear-axle motor are controlled to stop when all the tire pressures are equal to zero and/or less than the preset calibration threshold.

In a possible implementation, the controlling the front-axle motor and the rear-axle motor first to rotate in the reverse direction at low speed and then to rotate in the forward direction at low speed according to the reciprocating-motion mode includes: controlling the front-axle motor and the rear-axle motor first to rotate in the reverse direction at low speed and then to rotate in the forward direction at low speed according to a mode in which the front-axle motor and the rear-axle motor are controlled to rotate at low speed with their rotation directions switched at a calibration frequency.

In a possible implementation, the front-axle motor and the rear-axle motor being controlled to rotate at low speed with their rotation directions switched at the calibration frequency includes: determining at least one first rotation-switching cycle according to the calibration frequency; controlling the front-axle motor to rotate in the reverse direction at low speed and controlling the rear-axle motor to rotate in the forward direction at low speed within an n-th first rotation-switching cycle, where n is a natural number greater than 0; and controlling the front-axle motor to rotate in the reverse direction at low speed and controlling the rear-axle motor to rotate in the forward direction at low speed within an (n+1)-th first rotation-switching cycle, where n+1 is less than or equal to a total number of rotation-switching cycles.

In a possible implementation, the front-axle motor and the rear-axle motor being controlled to rotate at low speed with their rotation directions switched at the calibration frequency includes: determining a plurality of second rotation-switching cycles according to the calibration frequency; controlling the front-axle motor to rotate in the reverse direction at low speed and controlling the rear-axle motor to rotate in the reverse direction at low speed within an n-th second rotation-switching cycle, where n is a natural number greater than 0; and controlling the front-axle motor to rotate in the forward direction at low speed and controlling the rear-axle motor to rotate in the forward direction at low speed within an (n+1)-th second rotation-switching cycle, where n+1 is less than or equal to the total number of the second rotation-switching cycles.

In a possible implementation, after the acquiring the tire pressure of each wheel in real time, the method further includes: returning to the step of controlling the suspension to extend to the maximum stretch state, when all the tire pressures meet a motor operation condition.

In a possible implementation, after the controlling the suspension to extend to the maximum stretch state, the method further includes: returning to the step of controlling the front-axle motor to rotate in the forward direction to drive the wheels in forward rotation and controlling the rear-axle motor to rotate in the reverse direction to drive the wheels in reverse rotation, when the sum of all the tire pressures is less than the weight data of the vehicle.

In a possible implementation, simultaneously with the controlling the suspension to retract, the method further includes: controlling the wheels to perform a reciprocating motion of left-right oscillating.

In a second aspect, the present application provides an apparatus for controlling vehicle extrication, where the vehicle includes a vehicle body, a suspension installed at a bottom of the vehicle body, a plurality of wheels connected to the suspension, a front-axle motor installed at the bottom of the vehicle body for driving the wheels, and a rear-axle motor installed at the bottom of the vehicle body for driving the wheels, where the apparatus includes:
a suspension control module, configured to control the suspension to extend to a maximum stretch state, in response to a user's activation operation of an extrication mode;
a drive control module, configured to control the front-axle motor to rotate in a forward direction to drive the wheels in forward rotation, and control the rear-axle motor to rotate in the reverse direction to drive the wheels in reverse rotation;
a load monitoring module, configured to acquire a tire pressure of each wheel in real time, and control the front-axle motor and the rear-axle motor to stop when all tire pressures meet a motor stop condition;
the suspension control module is further configured to control the suspension to retract, and control the front-axle motor and the rear-axle motor to rotate at low speed until the suspension is retracted to a maximum retraction state;
the drive control module is further configured to control the front-axle motor and the rear-axle motor to stop, and control the suspension to extend to the maximum stretch state;
the drive control module is further configured to control the front-axle motor and the rear-axle motor to rotate when a sum of all the tire pressures is equal to weight data of the vehicle, to drive the wheels to rotate to complete extrication.

In a third aspect, the present application provides a device for controlling vehicle extrication, including at least one processor and a memory;
the memory is stored with computer-executable instructions;
the at least one processor executes the computer-executable instructions stored in the memory to cause the at least one processor to implement the method for controlling vehicle extrication described in the first aspect above.

In a fourth aspect, the present application provides a computer-readable storage medium, where the computer-readable storage medium stores computer-executable instructions, and the method for controlling vehicle extrication described in the first aspect above is implemented when a processor executes the computer-executable instructions.

In the method, apparatus, and device for controlling vehicle extrication, and the storage medium provided by the present application, by controlling the suspension to extend to the maximum stretch state, and then controlling the front-axle motor to rotate in the forward direction to drive the wheels in forward rotation, while controlling the rear-axle motor to rotate in the reverse direction to drive the wheels in reverse rotation, the wheels entrain and backfill sandy soil into a central area beneath the vehicle suspension to provide support force for the suspension, until the tire pressures acquired in real time meet the motor stop condition, and then the front-axle motor and the rear-axle motor are controlled to stop. Next, the suspension is controlled to retract, and the front-axle motor and the rear-axle motor are controlled to rotate at low speed to entrain sandy soil and backfill beneath the wheels, until the suspension is retracted to the maximum retraction state. When the sum of all the tire pressures is equal to the weight data of the vehicle, the front-axle motor and the rear-axle motor are controlled to rotate, to drive the wheels to rotate to complete extrication. This reduces the influence of human factors during the entire extrication process, saving time and effort.

After reading and understanding the drawings and detailed description, other aspects will be apparent.

### BRIEF DESCRIPTION OF DRAWINGS

In order to more clearly illustrate technical solutions in embodiments of the present application, the following will briefly introduce the drawings needed for describing the embodiments. Obviously, the drawings in the following description are only some embodiments of the present application. For those of ordinary skill in the art, other implementations can also be obtained based on these drawings without creative effort.
FIG. 1 is FIG. 1 is a schematic diagram of connection of hardware required for a method for controlling vehicle extrication provided by an embodiment of the present application.
FIG. 2 is a flowchart of a method for controlling vehicle extrication provided by an embodiment of the present application.
FIG. 3 is a structural diagram of an apparatus for controlling vehicle extrication provided by an embodiment of the present application.
FIG. 4 is a schematic structural diagram of an apparatus for controlling vehicle extrication provided by an embodiment of the present application.

### DESCRIPTION OF EMBODIMENTS

The above description is only an overview of technical solutions of the present invention. To understand technical means of the present invention more clearly, to enable it can be implemented according to the content of the description, and to make the above and other objectives, features, and advantages of the present invention more apparent and understandable, the following preferred embodiments are specifically described in detail with reference to the accompanying drawings.

It should be noted that those of ordinary skill in the art can explicitly and implicitly understand that the embodiments described in the present invention can be combined with other embodiments without contradiction. Unless otherwise defined, technical or scientific terms used in the present invention shall have ordinary meaning as understood by those of general skill in the art to which the present invention belongs. The terms "a", "an", "the" and similar terms used in the present invention do not denote a quantity limitation and can denote singular or plural. The terms "comprising", "containing", "having" and any variations thereof in the present invention are intended to cover non-exclusive inclusion. The terms "first", "second", "third", etc. in the present invention are merely used to distinguish similar objects and do not denote a specific order for the objects.

Currently, to achieve autonomous vehicle extrication, more and more vehicles are equipped with an extrication mode. When a vehicle is travelling on a road with complex road conditions, one optional implementation is to use the differential lock for automatic extrication besides manual extrication methods relying on a lot of manpower and time. However, for a vehicle travelling on soft, loose sand and stuck in sand, the high mobility of sand makes manual extrication methods consume a lot of manpower and time, and in the end the stuck vehicle may still be unable to achieve extrication. When the differential lock is used for extrication, the high mobility and softness of sand make the wheels have insufficient grip, the vehicle may still be unable to achieve extrication.

The embodiments of the present application provide the following technical concept: first, raising the entire vehicle using the vehicle's suspension and rotation of the wheels, then backfilling sandy soil using low-speed rotation of the wheels until the detected tire pressures equal to the vehicle's own weight, then increasing the grip of the wheels, and then driving the vehicle to achieve extrication. The entire process involves minimal human intervention, saving time and effort.

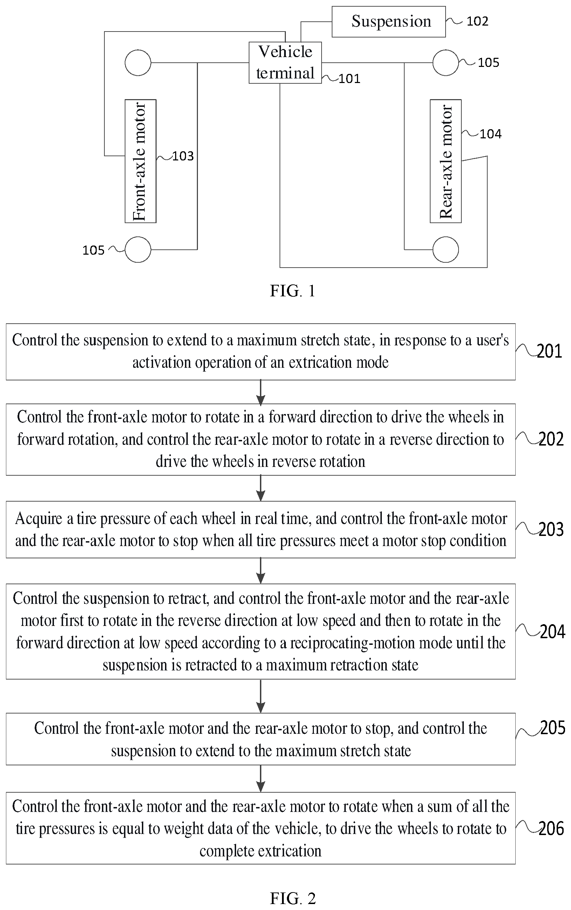

FIG. 1 is a schematic diagram of connection of hardware required for a method for controlling vehicle extrication, provided by an embodiment of the present application. As shown in FIG. 1, a vehicle terminal 101, a suspension 102, a front-axle motor 103, a rear-axle motor 104, and a plurality of air-spring load sensors 105 are included.

Among them, the vehicle terminal 101 is used for issuing control commands, collecting tire pressures acquired by the air-spring load sensors 105, and activating a vehicle extrication mode. The vehicle terminal 101 can be a vehicle computer, a vehicle controller, or a device including a chip or a processor having an electronic control unit (ECU). The suspension 102 is an apparatus for raising or lowering wheels, and the suspension 102 can be an electronically controlled active suspension. The front-axle motor 104 is used for driving front wheels of the vehicle to rotate. The rear-axle motor 104 is used for, after receiving control command(s) transmitted from the vehicle terminal 101, driving rear wheels of the vehicle to rotate according to the control command(s). The front-axle motor 103 and the rear-axle motor 104 can both be asynchronous induction motors or permanent magnet synchronous motors. The air-spring load sensors 105 are used for monitoring tire pressures of the wheels in real time and transmitting them to the vehicle terminal 101. The air-spring load sensors can be magneto-sensitive load sensors.

FIG. 2 is a flowchart of a method for controlling vehicle extrication provided by an embodiment of the present application. The execution subject of this embodiment can be the vehicle terminal 101 in the embodiment shown in FIG. 1, or can be other computer-related devices, which is not specifically limited in this embodiment.

In this embodiment, the embodiment of the present application provides a method for controlling vehicle extrication, where the vehicle includes a vehicle body, a suspension installed at a bottom of the vehicle body, a plurality of wheels connected to the suspension, a front-axle motor installed at the bottom of the vehicle body for driving the wheels, and a rear-axle motor installed at the bottom of the vehicle body for driving the wheels.

As shown in FIG. 2, the method for controlling vehicle extrication includes the following.

S201: the suspension is controlled to extend to a maximum stretch state, in response to a user's activation operation of an extrication mode.

In this embodiment, the activation operation of the extrication mode may be a process in which the user starts an automatic extrication program by pressing a one-touch start button. The automatic extrication program may be a pre-stored software program, for example, it may be a sand automatic extrication program. The maximum stretch state to which the suspension extends may refer to the maximum travel position to which the bottom of the suspension moves downward.

S202: the front-axle motor is controlled to rotate in a forward direction to drive the wheels in forward rotation, and the rear-axle motor is controlled to rotate in the reverse direction to drive the wheels in reverse rotation.

In this embodiment, the front-axle motor and the rear-axle motor can constitute the vehicle's drive motor system. Forward rotation of the front-axle motor and reverse rotation of the rear-axle motor constitute a special drive mode of the vehicle's drive motor system. The purpose of this special drive mode is not to drive the vehicle forward or backward, but to cause sandy soil to gather towards a central area beneath the vehicle under the action of the wheels, while allowing the wheels to sink further into the sand pit.

S203: a tire pressure of each wheel is acquired in real time; and the front-axle motor and the rear-axle motor are controlled to stop when all tire pressures meet a motor stop condition.

In this embodiment, the tire pressure of each wheel can be monitored in real time through a suspension load sensor mounted on the suspension.

Specifically, in an optional embodiment of the present application, the motor stop condition is that all the tire pressures are equal to zero and/or less than a preset calibration threshold. Correspondingly, step S203 includes controlling the front-axle motor and the rear-axle motor to stop when all the tire pressures are equal to zero and/or less than the preset calibration threshold.

In this embodiment, for ease of understanding, the number of the wheels of the vehicle is set to 4. When the tire pressures of four wheels are zero, it indicates that each wheel is in an airborne state, and the sandy soil gathered in the central area beneath the vehicle completely supports the entire vehicle, allowing the next step of making sandy soil backfill beneath the wheels to proceed.

The preset calibration threshold can be a pre-calibrated load value. Different geological conditions may correspond to different preset calibration thresholds. When the tire pressures of all wheels acquired in real time are less than this preset calibration threshold, it indicates that the sandy soil gathered in the central area beneath the vehicle can support the entire vehicle for the next step of making sandy soil backfill beneath the wheels.

When the tire pressures of all wheels are one of the following three cases: the tire pressures of all wheels are equal to zero, the tire pressures of all wheels are less than the preset calibration threshold, or the tire pressures of several wheels are zero while the tire pressures of the remaining wheels are less than the preset calibration threshold, the front-axle motor and the rear-axle motor can be controlled to stop, i.e., the operation of backfilling sandy soil or other backfill materials into the central area beneath the vehicle.

S204: the suspension is controlled to retract, and the front-axle motor and the rear-axle motor first are controlled to rotate in the reverse direction at low speed and then are controlled to rotate in the forward direction at low speed according to a reciprocating-motion mode until the suspension is retracted to a maximum retraction state.

In this embodiment, retracting the suspension refers to a process in which the suspension of the vehicle is contracted to cause a lower surface of the vehicle chassis to descend. The maximum retraction state can be a state in which the suspension is contracted to a point at which the suspension can no longer be contracted, or a state in which the lower surface of the vehicle chassis can no longer descend. The reciprocating-motion mode can be performing a first type of motion, then performing a second type of motion, then performing the first type of motion again, and so on.

In an optional embodiment of the present application, in step S204, the front-axle motor and the rear-axle motor first being controlled to rotate in the reverse direction at low speed and then being controlled to rotate in the forward direction at low speed according to the reciprocating-motion mode includes: controlling the front-axle motor and the rear-axle motor first to rotate in the reverse direction at low speed and then to rotate in the forward direction at low speed according to a mode in which the front-axle motor and the rear-axle motor are controlled to rotate at low speed with their rotation directions switched at a calibration frequency.

In this embodiment, the calibration frequency refers to a pre-set fixed frequency, such as once per minute, once every 10 minutes. The cycle corresponding to the calibration frequency can determine a time point at which the rotation directions are switched. Low-speed rotation refers to rotation below normal driving speed, to achieve the purpose of entraining just enough sandy soil to backfill beneath the wheels.

S205: the front-axle motor and the rear-axle motor are controlled to stop, and the suspension is controlled to extend to the maximum stretch state.

In this embodiment, when the wheels have retracted to their limit positions together with the suspension, the front-axle motor and the rear-axle motor driven at low speed should stop running. At this time, the suspension is controlled to extend to the maximum stretch state, i.e., the vehicle's wheels are lowered to their lowest positions again.

S206: the front-axle motor and the rear-axle motor are controlled to rotate when a sum of all the tire pressures is equal to weight data of the vehicle, to drive the wheels to rotate to complete extrication.

In this embodiment, if the sum of the tire pressures of all wheels acquired in real time is equal to the weight data of the vehicle, it indicates that the wheels have solid foothold and can fully support the entire vehicle. At this time, the vehicle is driven forward or backward, and the wheels can provide sufficient grip for extrication use. Controlling the front-axle motor and the rear-axle motor to rotate will cause the corresponding wheels to rotate, resulting in the forward or backward moving of the vehicle to complete extrication.

In summary, in the method for vehicle extrication provided by the embodiments of the present application, by controlling the suspension to extend to the maximum stretch state, and then controlling the front-axle motor to rotate in the forward direction to drive the wheels in forward rotation, while controlling the rear-axle motor to rotate in the reverse direction to drive the wheels in reverse rotation, the wheels entrain and backfill sandy soil into the central area beneath the suspension of the vehicle to provide support force for the suspension, until the tire pressures acquired in real time meet the motor stop condition, and then the front-axle motor and the rear-axle motor are controlled to stop. Next, the suspension is controlled to retract, and the front-axle motor and the rear-axle motor are controlled to rotate at low speed to entrain sandy soil to backfill beneath the wheels, until the suspension is retracted to the maximum retraction state. When the sum of all the tire pressures is equal to the weight data of the vehicle, the front-axle motor and the rear-axle motor are controlled to rotate, to drive the wheels to rotate to complete extrication. This reduces the influence of human factors during the entire extrication process, saving time and effort.

Based on the above embodiment, in an optional embodiment of the present application, in step S204, the front-axle motor and the rear-axle motor being controlled to rotate at low speed with their rotation directions switched at the calibration frequency includes the following.

S204a: at least one first rotation-switching cycle is determined according to the calibration frequency.

In this embodiment, the first rotation-switching cycle can be the reciprocal of the calibration frequency. For example, if the calibration frequency is once every 10 minutes, the first rotation-switching cycle is 10 minutes.

S204b: the front-axle motor is controlled to rotate in the reverse direction at low speed and the rear-axle motor is controlled to rotate in the forward direction at low speed within an n-th first rotation-switching cycle, where n is a natural number greater than 0.

S204c: the front-axle motor is controlled to rotate in the reverse direction at low speed and the rear-axle motor is controlled to rotate in the forward direction at low speed within an (n+1)-th first rotation-switching cycle, where n+1 is less than or equal to a total number of rotation- switching cycles.

In this embodiment, the process of making sandy soil backfill beneath the wheels can be a cyclic and repetitive process; and sometimes multiple rounds of backfilling are needed to meet the requirements for extrication. For example, within the 1st first rotation- switching cycle, the front-axle motor is controlled to rotate in the reverse direction at low speed and the rear-axle motor is controlled to rotate in the forward direction at low speed; within the 2nd first rotation-switching cycle, the front-axle motor is controlled to rotate in the reverse direction at low speed and the rear-axle motor is controlled to rotate in the forward direction at low speed, and so on. Through repeated low-speed rotation of the wheels, sandy soil located ahead of and behind the wheels is entrained and backfilled beneath the wheels.

In summary, in the method for controlling vehicle extrication provided by the embodiment of the present application, further by controlling the front-axle motor and the rear-axle motor to simultaneously perform cyclic and repetitive rotation in different rotation directions at low speed, the wheels are driven more quickly to entrain sandy soil located ahead of and behind of the wheels to backfill beneath the wheels, thereby improving the backfill efficiency of sandy soil and reducing the time for the vehicle extrication(s).

In an optional embodiment of the present application, in step S204, the front-axle motor and the rear-axle motor being controlled to rotate at low speed with their rotation directions switched at the calibration frequency includes the following.

Step a: a plurality of second rotation-switching cycles are determined according to the calibration frequency.

Step b: the front-axle motor is controlled to rotate in the reverse direction at low speed and the rear-axle motor is controlled to rotate in the reverse direction at low speed within an n-th second rotation-switching cycle, where n is a natural number greater than 0.

Step c: the front-axle motor is controlled to rotate in the forward direction at low speed and the rear-axle motor is controlled to rotate in the forward direction at low speed within an (n+1)-th second rotation-switching cycle, where n+1 is less than or equal to a total number of the second rotation-switching cycles. In this embodiment, a duration of the second rotation cycle can be the same as or different from a duration of the first rotation cycle, both being pre-set duration values. The difference between step a to step c and steps S204a to S204c in the above embodiment is that rotation directions of the front-axle motor and the rear-axle motor are the same within each second rotation cycle. For example: within the 1st second rotation cycle, both the front-axle motor and the rear-axle motor rotate in the forward direction at low speed, which corresponds to the vehicle's forward mode at this time; within the 2nd second rotation cycle, both the front-axle motor and the rear-axle motor rotate in the reverse direction at low speed, which corresponds to the vehicle's backward mode at this time.

Based on the above embodiments, in an optional embodiment of the present application, after step S203 of acquiring the tire pressure of each wheel in real time, the method further includes step A: returning to the step of controlling the suspension to extend to the maximum stretch state when all the tire pressures meet a motor operation condition.

In this embodiment, the motor operation condition can be that all the tire pressures are not zero, tire pressures of part of the wheels are zero while tire pressures of the remaining wheels are greater than the preset calibration threshold, and all tire pressures are greater than the preset calibration threshold. This indicates that the sandy soil gathered in the central area beneath the vehicle bottom is insufficient to support the entire vehicle, and more sandy soil needs to be filled into the central area beneath the vehicle. Therefore, steps S201 to S203 need to be repeated until all the tire pressures meet the motor stop condition.

In summary, in the method for controlling vehicle extrication provided by the embodiment of the present application, when sandy soil backfilled into the central area beneath the vehicle bottom are insufficient to support the entire vehicle, the front-axle motor and the rear-axle motor are further controlled to cyclically and repetitively drive the wheels to rotate, allowing sandy soil to backfill into the central area beneath the vehicle bottom. This provides support for the vehicle, thereby ensuring subsequent vehicle extrication and increasing the success rate of extrication.

In an optional embodiment of the present application, after step S203 of acquiring the tire pressure of each wheel in real time, the method further includes step B: returning to the step of controlling the front-axle motor to rotate in the forward direction to drive the wheels in forward rotation, and controlling the rear-axle motor to rotate in the reverse direction to drive the wheels in reverse rotation, when the sum of all the tire pressures is less than the weight data of the vehicle.

In this embodiment, the sum of the tire pressures being less than the weight data of the vehicle indicates that one of the wheels has no solid foothold, and the supporting force of all the wheels is still insufficient to support the entire vehicle, thereby directly driving the vehicle may cause the vehicle to get stuck again. At this time, it is necessary to return to step S202. Such reciprocating cycles can cause more and more sandy soil to backfill beneath the wheels.

In an optional embodiment of the present application, when a faster sandy soil backfilling speed is needed, the sandy soil backfilling operation may be performed with driver assistance. For example, simultaneously with the execution of step S204, the driver assists in moving sandy soil to beneath the wheels to improve the backfilling rate of sandy soil.

Based on the above embodiments, as an optional embodiment of the method for controlling vehicle extrication provided by the present application, simultaneously with controlling the suspension to retract in step S204, the method further includes step C: controlling the wheels to perform a reciprocating motion of left-right oscillating.

In this embodiment, controlling the vehicle to perform the reciprocating motion of left-right oscillating can be achieved by controlling the vehicle's shift lever to drive the front wheels of the vehicle to rotate, thereby causing the vehicle to perform the reciprocating motion of left-right oscillating.

In summary, in the method for controlling vehicle extrication provided by the embodiment of the present application, by further controlling the wheels to perform the reciprocating motion of left-right oscillating while controlling the suspension to retract, wheel edges entrain sandy soil on the left and right sides of the wheels and direct it to flow beneath the wheels, thereby achieving the purpose of accelerating sandy soil backfilling.

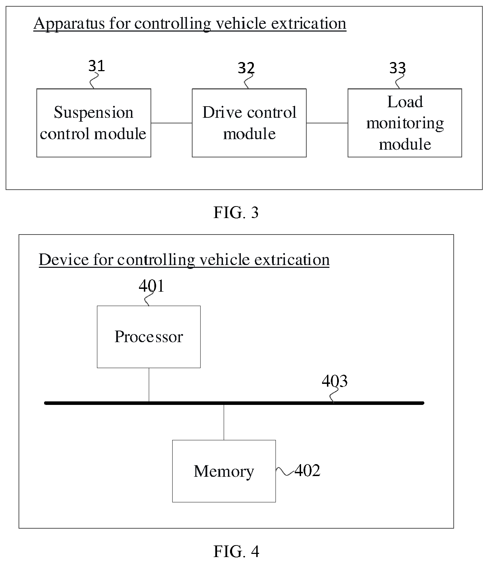

FIG. 3 is a structural diagram of an apparatus for controlling vehicle extrication provided by an embodiment of the present application, where the vehicle includes a vehicle body, a suspension installed at a bottom of the vehicle body, a plurality of wheels connected to the suspension, a front-axle motor installed at the bottom of the vehicle body for driving the wheels, and a rear-axle motor installed at the bottom of the vehicle body for driving the wheels. The apparatus includes: a suspension control module 31, a drive control module 32, and a load monitoring module 33.

Among them, the suspension control module 31 is configured to control the suspension to extend to a maximum stretch state, in response to a user's activation operation of an extrication mode.

The drive control module 32 is configured to control the front-axle motor to rotate in a forward direction to drive the wheels in forward rotation, and control the rear-axle motor to rotate in a reverse direction to drive the wheels to rotate in reverse rotation.

The load monitoring module 33 is configured to acquire a tire pressure of each wheel in real time, and control the front-axle motor and the rear-axle motor to stop when all the tire pressures meet a motor stop condition.

The suspension control module 31 is further configured to control the suspension to retract, and control the front-axle motor and the rear-axle motor first to rotate in the reverse direction at low speed and then to rotate in the forward direction at low speed according to a reciprocating-motion mode until the suspension is retracted to a maximum retraction state.

The drive control module 32 is further configured to control the front-axle motor and the rear-axle motor to stop, and control the suspension to extend to the maximum stretch state.

The drive control module 32 is further configured to control the front-axle motor and the rear-axle motor to rotate when a sum of all the tire pressures is equal to weight data of the vehicle, to drive the wheels to rotate to complete extrication.

In an optional embodiment of the present application, the motor stop condition is that all the tire pressures are equal to zero and/or less than a preset calibration threshold. Correspondingly, the drive control module 32 is specifically configured to control the front-axle motor and the rear-axle motor to stop when all the tire pressures are equal to zero and/or less than the preset calibration threshold.

In an optional embodiment of the present application, the drive control module 32 is specifically configured to control the front-axle motor and the rear-axle motor first to rotate in the reverse direction at low speed and then to rotate in the forward direction at low speed according to a mode in which the front-axle motor and the rear-axle motor are controlled to rotate at low speed with their rotation directions switched at a calibration frequency.

In an optional embodiment of the present application, the drive control module 32 is specifically configured to: determine at least one first rotation-switching cycle according to the calibration frequency; control the front-axle motor to rotate in the reverse direction at low speed and control the rear-axle motor to rotate in the forward direction at low speed within an n-th first rotation-switching cycle, where n is a natural number greater than 0; and control the front-axle motor to rotate in the reverse direction at low speed and control the rear-axle motor to rotate in the forward direction at low speed within an (n+1)-th first rotation-switching cycle, where n+1 is less than or equal to a total number of rotation-switching cycles.

In an optional embodiment of the present application, the drive control module 32 is specifically configured to: determine a plurality of second rotation-switching cycles according to the calibration frequency; control the front-axle motor to rotate in the reverse direction at low speed and control the rear-axle motor to rotate in the reverse direction at low speed within an n-th second rotation-switching cycle, where n is a natural number greater than 0; and control the front-axle motor to rotate in the forward direction at low speed and control the rear-axle motor to rotate in the forward direction at low speed within an (n+1)-th second rotation-switching cycle, where n+1 is less than or equal to a total number of the second rotation-switching cycles.

In an optional embodiment of the present application, after acquiring the tire pressure of each wheel in real time, the suspension control module 31 is further configured to: return to the step of controlling the suspension to extend to the maximum stretch state, when all the tire pressures meet a motor operation condition.

In an optional embodiment of the present application, after controlling the suspension to extend to the maximum stretch state, the drive control module 32 is further configured to: return to the step of controlling the front-axle motor to rotate in the forward direction to drive the wheels in forward rotation and controlling the rear-axle motor to rotate in the reverse direction to drive the wheels in reverse rotation, when the sum of all the tire pressures is less than the weight data of the vehicle.

In an optional embodiment of the present application, simultaneously with the controlling the suspension to retract, the drive control module 32 is further configured to: control the wheels to perform a reciprocating motion of left-right oscillating.

The apparatus for controlling vehicle extrication provided in this embodiment can be used to execute the technical solutions of the above method embodiment. Both have the similar implementation principle and technical effects, and no repetition is made herein.

FIG. 4 is a schematic structural diagram of hardware of a device for controlling vehicle extrication provided by an embodiment of the present application. As shown in FIG. 4, the device includes at least one processor 401 and a memory 402.

Among them, the memory 402 is used for storing computer-executable instructions.

The processor 401 is used for executing the computer-executable instructions stored in the memory 402 to implement various steps involved in the above method of the embodiments. For details, reference may be made to the related descriptions in the foregoing method of the embodiments.

Optionally, the memory 402 can be independent or integrated with the processor 401.

When the memory 402 is set independently, the device further includes a bus 403 for connecting the memory 402 and the processor 401.

An embodiment of the present application also provides a computer-readable storage medium, having computer-executable instructions stored therein, where when a processor executes the computer-executable instructions, the method for controlling vehicle extrication as described above is implemented.

An embodiment of the present application also provides a computer program product, including a computer program which, when executed by a processor, implements the method for controlling vehicle extrication as described above.

In the several embodiments provided by the present application, it should be understood that the disclosed apparatus and method can be implemented in other ways. For example, the apparatus embodiments described above are merely illustrative. For example, the division of the modules is only a logical function division. In actual implementations, there can be other division methods. For example, multiple modules can be combined or integrated into another system, or some features can be ignored or not executed. In addition, the displayed or discussed mutual coupling or direct coupling or communication connection can be indirect coupling or communication connection through some interfaces, apparatuses, or modules, which can be electrical, mechanical, or other forms.

The modules described as separate components may or may not be physically separated, and the components displayed as modules may or may not be physical units, that is, they can be located in one place, or can be distributed to multiple network units. Some or all of the modules can be selected according to actual needs to achieve the objectives of the embodiments.

In addition, the functional modules in the various embodiments of the present invention can be integrated into one processing unit, or each module can exist physically alone, or two or more modules can be integrated into one unit. The units formed by the above-mentioned modules can be implemented in the form of hardware, or in the form of hardware-plus-software functional units.

The integrated modules implemented in the form of the above-mentioned software functional modules can be stored in a computer-readable storage medium. The above-mentioned software functional modules are stored in a storage medium and include several instructions to cause a computer device (which can be a personal computer, a server, or a network device, etc.) or a processor to implement some of the steps of the methods described in the various embodiments of the present application.

It should be understood that the above-mentioned processor can be a central processing unit (Central Processing Unit, CPU), or can be other general-purpose processors, a digital signal processor (Digital Signal Processor, DSP), an application specific integrated circuit (Application Specific Integrated Circuit, ASIC), etc. The general-purpose processors can be a microprocessor or the processor can also be any conventional processor. The steps of the methods disclosed in connection with the present invention can be directly embodied as being implemented and completed by a hardware processor, or implemented and completed by a combination of hardware and software modules in the processor.

The memory may include a high-speed RAM memory, and may also include a non-volatile storage (NVM), such as at least one disk memory, and may also be a U disk, a mobile hard disk, a read-only memory, a disk, or an optical disk, etc.

The bus can be an industry standard architecture (Industry Standard Architecture, ISA) bus, a peripheral component interconnect (Peripheral Component Interconnect, PCI) bus, or an extended industry standard architecture (Extended Industry Standard Architecture, EISA) bus, etc. The bus can be classified into an address bus, a data bus, a control bus, etc. For ease of representation, the bus in the accompanying drawings of the present application is not limited to only one bus or one type of bus.

The above-mentioned storage medium can be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The storage medium can be any available medium that can be accessed by a general-purpose or special-purpose computer.

An exemplary storage medium is coupled to the processor so that the processor can read information from, and write information to, the storage medium. Of course, the storage medium can also be an integral part of the processor. The processor and the storage medium may be located in an application specific integrated circuit (Application Specific Integrated Circuit, ASIC). Of course, the processor and the storage medium can also exist as discrete components in an electronic device or a main control device.

The technical features of the above-described embodiments can be combined arbitrarily. For the sake of brevity, not all possible combinations of the technical features in the above embodiments are described. However, as long as there is no contradiction in the combination of these technical features, they should be considered as within the scope of this specification.

The above-described embodiments only express several implementations of the present application, and the description thereof is specific and detailed, but should not be understood as limiting the scope of the patent. It should be pointed out that for those of ordinary skill in the art, without departing from the concept of the present application, several modifications and improvements can be made, which all fall within the protection scope of the present application. Therefore, the protection scope of the present application patent shall be subject to the appended claims.

## Claims

1. A method for controlling vehicle extrication, wherein the vehicle comprises a vehicle body, a suspension installed at a bottom of the vehicle body, a plurality of wheels connected to the suspension, a front-axle motor installed at the bottom of the vehicle body for driving the wheels, and a rear-axle motor installed at the bottom of the vehicle body for driving the wheels, wherein the method comprises:
controlling the suspension to extend to a maximum stretch state, in response to a user's activation operation of an extrication mode;
controlling the front-axle motor to rotate in a forward direction to drive the wheels in forward rotation, and controlling the rear-axle motor to rotate in a reverse direction to drive the wheels in reverse rotation;
acquiring a tire pressure of each wheel in real time, and controlling the front-axle motor and the rear-axle motor to stop when all tire pressures meet a motor stop condition;
controlling the suspension to retract, and controlling the front-axle motor and the rear-axle motor first to rotate in the reverse direction at low speed and then to rotate in the forward direction at low speed according to a reciprocating-motion mode until the suspension is retracted to a maximum retraction state;
controlling the front-axle motor and the rear-axle motor to stop, and controlling the suspension to extend to the maximum stretch state;
controlling the front-axle motor and the rear-axle motor to rotate when a sum of all the tire pressures is equal to weight data of the vehicle, to drive the wheels to rotate to complete extrication.

2. The method according to claim 1, wherein the motor stop condition is that all the tire pressures are equal to zero and/or less than a preset calibration threshold;
correspondingly, the controlling the front-axle motor and the rear-axle motor to stop when all the tire pressures meet the motor stop condition comprises:
controlling the front-axle motor and the rear-axle motor to stop when all the tire pressures are equal to zero and/or less than the preset calibration threshold.

3. The method according to claim 2, wherein the preset calibration threshold is associated with a geological condition, and different geological conditions correspond to different preset calibration thresholds.

4. The method according to any one of claims 1 to 3, wherein the controlling the front-axle motor and the rear-axle motor first to rotate in the reverse direction at low speed and then to rotate in the forward direction at low speed according to the reciprocating-motion mode comprises:
controlling the front-axle motor and the rear-axle motor first to rotate in the reverse direction at low speed and then to rotate in the forward direction at low speed according to a mode in which the front-axle motor and the rear-axle motor are controlled to rotate at low speed with their rotation directions switched at a calibration frequency.

5. The method according to claim 4, wherein the front-axle motor and the rear-axle motor being controlled to rotate at low speed with their rotation directions switched at the calibration frequency comprises:
determining at least one first rotation-switching cycle according to the calibration frequency;
controlling the front-axle motor to rotate in the reverse direction at low speed and controlling the rear-axle motor to rotate in the forward direction at low speed within an n-th first rotation-switching cycle, wherein n is a natural number greater than 0;
controlling the front-axle motor to rotate in the reverse direction at low speed and controlling the rear-axle motor to rotate in the forward direction at low speed within an (n+1)-th first rotation-switching cycle, wherein n+1 is less than or equal to a total number of rotation-switching cycles.

6. The method according to claim 4, wherein the front-axle motor and the rear-axle motor being controlled to rotate at low speed with their rotation directions switched at the calibration frequency comprises:
determining a plurality of second rotation-switching cycles according to the calibration frequency;
controlling the front-axle motor to rotate in the reverse direction at low speed and controlling the rear-axle motor to rotate in the reverse direction at low speed within an n-th second rotation-switching cycle, wherein n is a natural number greater than 0;
controlling the front-axle motor to rotate in the forward direction at low speed and controlling the rear-axle motor to rotate in the forward direction at low speed within an (n+1)-th second rotation-switching cycle, wherein n+1 is less than or equal to a total number of the second rotation-switching cycles.

7. The method according to any one of claims 1 to 6, wherein after the acquiring the tire pressure of each wheel in real time, the method further comprises:
returning to the step of controlling the suspension to extend to the maximum stretch state, when all the tire pressures meet a motor operation condition.

8. The method according to claim 7, wherein the motor operation condition comprises that all the tire pressures are not zero, tire pressures of part of the wheels are zero while tire pressures of the remaining wheels are greater than the preset calibration threshold, and all the tire pressures are greater than the preset calibration threshold.

9. The method according to any one of claims 1 to 8, wherein after the controlling the suspension to extend to the maximum stretch state, the method further comprises:
returning to the step of controlling the front-axle motor to rotate in the forward direction to drive the wheels in forward rotation and controlling the rear-axle motor to rotate in the reverse direction to drive the wheels in reverse rotation, when the sum of all the tire pressures is less than the weight data of the vehicle.

10. The method according to any one of claims 1 to 9, wherein simultaneously with the controlling the suspension to retract, the method further comprises:
controlling the wheels to perform a reciprocating motion of left-right oscillating.

11. The method according to any one of claims 1 to 10, wherein simultaneously with the controlling the suspension to retract, and controlling the front-axle motor and the rear-axle motor first to rotate in the reverse direction at low speed and then to rotate in the forward direction at low speed according to the reciprocating-motion mode until the suspension is retracted to the maximum retraction state, the method further comprises:
performing a sandy soil backfilling operation with driver assistance.

12. An apparatus for controlling vehicle extrication, wherein the vehicle comprises a vehicle body, a suspension installed at a bottom of the vehicle body, a plurality of wheels connected to the suspension, a front-axle motor installed at the bottom of the vehicle body for driving the wheels, and a rear-axle motor installed at the bottom of the vehicle body for driving the wheels, wherein the apparatus comprises:
a suspension control module, configured to control the suspension to extend to a maximum stretch state, in response to a user's activation operation of an extrication mode;
a drive control module, configured to control the front-axle motor to rotate in a forward direction to drive the wheels in forward rotation, and control the rear-axle motor to rotate in a reverse direction to drive the wheels in reverse rotation;
a load monitoring module, configured to acquire a tire pressure of each wheel in real time, and control the front-axle motor and the rear-axle motor to stop when all tire pressures meet a motor stop condition;
the suspension control module is further configured to control the suspension to retract, and control the front-axle motor and the rear-axle motor to rotate at low speed until the suspension is retracted to a maximum retraction state;
the drive control module is further configured to control the front-axle motor and the rear-axle motor to stop, and control the suspension to extend to the maximum stretch state;
the drive control module is further configured to control the front-axle motor and the rear-axle motor to rotate when a sum of all the tire pressures is equal to weight data of the vehicle, to drive the wheels to rotate to complete extrication.

13. A device for controlling vehicle extrication, comprising at least one processor and a memory;
the memory is stored with computer-executable instructions;
the at least one processor executes the computer-executable instructions stored in the memory to cause the at least one processor to implement the method for controlling vehicle extrication according to any one of claims 1 to 11.

14. A computer-readable storage medium, wherein the computer-readable storage medium stores computer-executable instructions, and the method for controlling vehicle extrication according to any one of claims 1 to 11 is implemented when a processor executes the computer-executable instructions.
